Europäisches Patentamt

European Patent Office

Office européen des brevets

(19)

(11) Veröffentlichungsnummer : **0 193 133**
**B1**

(12) **EUROPÄISCHE PATENTSCHRIFT**

(45) Veröffentlichungstag der Patentschrift :
11.10.89

(51) Int. Cl.⁴ : **B 60 R 13/06**, E 06 B 7/23

(21) Anmeldenummer : 86102283.8

(22) Anmeldetag : 21.02.86

(54) **Profilstrang.**

(30) Priorität : 26.02.85 DE 3506720

(43) Veröffentlichungstag der Anmeldung :
03.09.86 Patentblatt 86/36

(45) Bekanntmachung des Hinweises auf die Patenter-
teilung : 11.10.89 Patentblatt 89/41

(84) Benannte Vertragsstaaten :
AT BE CH DE FR GB IT LI LU NL SE

(56) Entgegenhaltungen :
EP--A-- 0 155 641
EP--A-- 0 189 166
DE--A-- 1 659 672
DE--A-- 2 151 144
FR--A-- 2 010 243
FR--E--    67 244
GB--A-- 2 109 042

(73) Patentinhaber : **Continental Aktiengesellschaft**
**Königsworther Platz 1**
**D-3000 Hannover 1 (DE)**

(72) Erfinder : **Bernitz, Bernhard**
**Langenforther Strasse 60**
**D-3000 Hannover 51 (DE)**
Erfinder : **Brodmann, Richard**
**Sadebuschstrasse 15**
**D-3000 Hannover 21 (DE)**
Erfinder : **Hermann, Dietmar**
**Kantstrasse 7**
**D-3008 Garbsen 6 (DE)**

## Beschreibung

Die Erfindung bezieht sich auf Profilstränge zum dichtenden Einfassen von Fenster- oder Türöffnungen in Fahrzeugen oder Gebäuden mit relativ zu den Profilsträngen gleitend beweglichen Scheiben, gemäß dem Oberbegriff des Patentanspruchs 1.

Schiebefenster und andere mit Bewegungsmöglichkeit eingefaßte Scheiben, Türblätter u. dgl. finden an den anliegenden Gummidichtprofilsträngen infolge deren natürlicherweise vorgegebenen Oberflächenbeschaffenheit einen unerwünscht hohen Gleitwiderstand. Es hat sich daher in der Praxis schon seit längerem eingebürgert, die Profilstränge zumindest in den gleitend berührten Umfangsbereichen mit einem das Gleiten begünstigenden Oberflächenbelag auszustatten. Derartige Profilstränge sind beispielsweise aus der GB-A-2 109 042 bekannt.

Im Hinblick auf die im Gebrauch ständig auftretenden wechselnden Beanspruchungen solcher Dichtungsprofile — insbesondere Scherbeanspruchungen — ist eine festhaftende stoffschlüssige Bindung des Belages an den Strangkörper unerläßlich. Diese ist mit der notwendigen Abreißfestigkeit und Haltbarkeit je nach den verschiedenen Werkstoffpaarungen oft nur schwer herzustellen, und sie bereitet besondere Schwierigkeiten, wenn als Oberflächenbelag ein fluorhaltiger Kunststoff verwendet wird, wie beispielsweise Polytetrafluoräthylen, das sich andererseits durch seine hervorragenden Gleiteigenschaften vor allen anderen sonst gebräuchlichen Belagswerkstoffen auszeichnet. Unter diesen Umständen werden die besagten Gleitbeläge vorzugsweise in Form flacher geschlossenflächiger Bänder aufgebracht, die im Gegensatz zu schmalen, leistenförmigen Gleitauflagen den Vorteil einer großen Haftfläche bieten.

Der vorliegenden Erfindung liegt die Aufgabe zugrunde, bei Profilsträngen mit gut haftenden und deshalb großflächigen Gleitbelägen die Gleiteigenschaften gegenüber den daran gleitend zur Anlage kommenden Fensterscheiben weiter zu verbessern.

Diese Aufgabe wird, ausgehend von Profilsträngen der eingangs angegebenen Gattung, gemäß der vorliegenden Erfindung durch die Merkmale des kennzeichnenden Teils des Anspruchs 1 gelöst. Hiebei empfiehlt sich eine Strukturierung in Mikrogrößenordnung. Die Struktuirierung kann nach verschiedenen Verfahren und wahlweise vor oder nach dem Verbinden mit den Profilsträngen auf die Belagsbänder aufgebracht sein. So haben sich beispielsweise Profilstränge besonders bewährt, bei denen die Strukturierung der Gleitbelagsoberfläche in Form einer durch Prägung erzeugten Folge von Vertiefungen bzw. Erhöhungen ausgebildet ist. In einer anderen vorteilhaften Ausführungsform ist die Oberflächenstruktur durch Aufrauhen erzeugt, wobei die Aufrauhung insbesondere durch Bestrahlung mit beschleunigten Partikeln — also z. B. durch Sandstrahlen —

erzeugt sein kann.

Überraschenderweise führt die erfindungsgemäße Strukturierung bzw. Aufrauhung der Belagsoberfläche nicht zu einer Erhöhung des Gleitwiderstandes, sondern hat eine deutliche Verbesserung der Gleitfähigkeit zur Folge. Diese unerwartete vorteilhafte Wirkung ist wahrscheinlich in der Auflösung des sonst linien- oder flächenhaften Kontaktes mit der relativ zu dem Profilstrang bewegten Scheibe in eine Vielzahl von einzelnen Berührungspunkten begründet; außerdem wird dadurch über den gesamten Dichtungsumfang ein Luftaustausch durch die und in der Berührungszone möglich und jede störende Saug- oder Adhäsionswirkung von vornherein abgebaut. Es hat sich darüber hinaus gezeigt, daß die neuartigen Profilstränge auch unter starkem Frost nicht mehr oder zumindest nicht in dem üblichen Maße der Gefahr des Festfrierens an den Scheiben, Türblättern od. dgl. unterliegen.

Die Erfindung ist nicht auf die Verwendung bestimmter Belagwerkstoffe beschränkt. Vielmehr eröffnet sie die Möglichkeit, anstelle der schwierig zu handhabenden fluorhaltigen Kunststoffe auch Oberflächenbeläge aus anderen leichter zu haftender Bindung mit dem Gummi der Profilstränge zu bringenden thermoplastischen Kunststoffen wie beispielsweise Polyamid, Polyvinylchlorid u.a.m. einzusetzen.

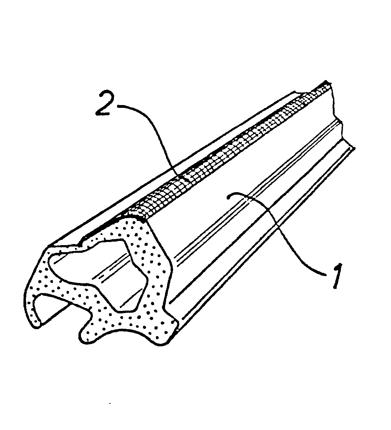

Ein Ausführungsbeispiel der Erfindung ist in der Zeichnung schematisch dargestellt. Die einzige Figur der Zeichnung zeigt einen Abschnitt eines neuartigen Zweistoff-Profilstranges in perspektivischer Ansicht.

Der gezeichnete Profilstrang ist in seinem Hauptteil 1 aus einem witterungsbeständigen Gummi hergestellt und nur in einem mit der nicht weiter dargestellten Scheibe eines Schiebefensters in gleitende Berührung tretenden begrenzten äußeren Umfangsabschnitt mit einem festhaftend aufgebrachten Oberflächenbelag 2 versehen. Der Belag 2 ist mit einer beispielsweise eingeprägten Oberflächenstrukturierung in Form einer in Mikrogrößenordnung sich bewegenden Rauhigkeitsmusterung ausgebildet.

## Patentansprüche

1. Profilstrang zum dichtenden Einfassen von Fenster- oder Türöffnungen in Fahrzeugen oder Gebäuden mit relativ zu dem Profilstrang gleitend beweglichen Scheiben, der aus Kautschuk oder kautschukartigen Elastomeren hergestellt ist und bei dem diejenigen Bereiche seiner Oberfläche, an denen die beweglichen Scheiben gleitend zur Anlage kommen, jeweils vollständig mit einem geschlossenflächigen, haftend aufgebrachten Belag in Form eines in der Längsrichtung des Profilstranges sich erstreckenden flachen Bandes aus einem reibungsmindernden andersartigen Werkstoff versehen sind, dadurch gekennzeichnet, daß die gesamte, der gleitend beweglichen Scheibe zugewandte Oberfläche des Belagsbandes (2) eine in sie eingearbeitete Strukturierung aufweist.

2. Profilstrang nach Anspruch 1, dadurch gekennzeichnet, daß die Oberfläche des Belagsbandes (2) in Mikrogrößenordnung strukturiert ist.

3. Profilstrang nach Anspruch 1 oder 2, dadurch gekennzeichnet, daß das Belagsband (2) mit einer durch Prägung erzeugten Folge von Vertiefungen bzw. Erhöhungen ausgebildet ist.

4. Profilstrang nach Anspruch 3, dadurch gekennzeichnet, daß die Vertiefungen bzw. Erhöhungen untereinander verbunden sind.

5. Profilstrang nach Anspruch 1 oder 2, dadurch gekennzeichnet, daß die Oberflächenstruktur des Belagsbandes (2) durch Aufrauhen erzeugt ist.

6. Profilstrang nach Anspruch 5, dadurch gekennzeichnet, daß das Belagsband (2) eine durch Partikelbestrahlung, z. B. durch Sandstrahlen, aufgerauhte Oberfläche aufweist.

## Claims

1. Extruded profile for sealingly bordering window or door openings in vehicles or buildings provided with panes which are slidingly displaceable relative to the extruded profile, which profile is formed from rubber or rubber-like elastomers, and wherein those regions of its surface, against which the displaceable panes slidingly abut, are each provided completely with an adhesively applied cover, which has a continuous surface and is in the form of a flat strip, which extends in the longitudinal direction and is formed from a different, friction-reducing material, characterised in that the entire surface of the cover strip (2), facing the slidingly displaceable pane, has a structured design incorporated therein.

2. Extruded profile according to claim 1, characterised in that the surface of the cover strip (2) is structured in a micro order of magnitude.

3. Extruded profile according to claim 1 or 2, characterised in that the cover strip (2) is provided with a succession of indentations and/or raised portions produced by an embossing process.

4. Extruded profile according to claim 3, characterised in that the indentations and/or raised portions are interconnected.

5. Extruded profile according to claim 1 or 2, characterised in that the surface structure of the cover strip (2) is produced by a roughening process.

6. Extruded profile according to claim 5, characterised in that the cover strip (2) has a surface which has been roughened as a result of being blasted by particles, e. g. by means of a sandblasting process.

## Revendications

1. Cordon profilé d'étanchéité pour le montage étanche, dans des ouvertures de fenêtres ou de portes de véhicules automobiles ou de bâtiments, de glaces mobiles par glissement par rapport aux cordons profilés, qui est fabriqué en caoutchouc ou en matières élastomères analogues au caoutchouc et dans lequel les zones de sa surface qui entrent en contact glissant avec la glace mobile sont respectivement pourvues complètement d'un revêtement déposé de façon adhérente et avec une surface fermée sous la forme d'une bande plate s'étendant dans la direction longitudinale et constituée d'un matériau d'une nature différente qui réduit le frottement, caractérisé en ce que la totalité de la surface de la bande de revêtement (2), qui est dirigée vers la glace mobile par glissement, comporte une texture surfacique formée dans cette surface.

2. Cordon profilé d'étanchéité selon la revendication 1, caractérisé en ce que la surface de la bande de revêtement (2) est pourvue d'une texture d'un ordre de grandeur du micron.

3. Cordon profilé d'étanchéité selon une des revendications 1 ou 2, caractérisé en ce que la bande de revêtement (2) est pourvue d'une succession de creux ou de saillies produits par empreinte.

4. Cordon profilé d'étanchéité selon la revendication 3, caractérisé en ce que les creux ou les saillies sont reliés entre eux.

5. Cordon profilé d'étanchéité selon une des revendications 1 ou 2, caractérisé en ce que la texture surfacique de la bande de revêtement (2) est produite par formation de rugosités.

6. Cordon profilé d'étanchéité selon la revendication 5, caractérisé en ce que la bande de revêtement (2) comporte une surface rendue rugueuse par une projection de particules, par exemple par sablage.